# EUROPEAN PATENT APPLICATION

(11) **EP 2 902 652 A1**
(43) Date of publication of application: **05.08.2015**
(21) Application number: 13842398.3
(22) Date of filing: 20.09.2013
(51) Int. Cl.: F16D 48/02, F16D 23/12, F16H 61/18

(54) **AUTOMATIC TRANSMISSION AND AUTOMATIC-TRANSMISSION CONTROL METHOD**

(30) Priority: 26.09.2012 JP 2012212561
(71) Applicant: Jatco Ltd, Fuji-shi, Shizuoka 417-8585 (JP)
(72) Inventor: NAKANO, Yusuke, Fuji-shi Shizuoka 417-8585 (JP); KOBAYASHI, Katsuya, Fuji-shi Shizuoka 417-8585 (JP); MATSUMOTO, Kouzi, Fuji-shi Shizuoka 417-8585 (JP); IKEDA, Tomomasa, Fuji-shi Shizuoka 417-8585 (JP)
(74) Representative: Hoefer & Partner Patentanwälte mbB
(86) International application number: PCT/JP2013/075435
(87) International publication number: WO 2014/050725

(57) **Abstract**

An automatic transmission is provided having a friction element in which, when an ON pressure is supplied to a engaging-side oil chamber, a hydraulic piston is moved and engaged, a lock mechanism enters a lock state, while when an OFF pressure is supplied to a release-side oil chamber, the lock mechanism is released, and the hydraulic piston is moved and released, in which the OFF pressure is supplied to the release-side oil chamber again when a mode of the automatic transmission changes from a mode for engaging the friction element to a mode for releasing the friction element, and when the friction element is not released even if the OFF pressure is supplied to the release-side oil chamber.

## Description

### TECHNICAL FIELD

The present invention relates to an automatic transmission and a control method of an automatic transmission.

### BACKGROUND ART

JP7-12221A uses a friction element operated by a hydraulic pressure in order to couple two members (in a case of a clutch, both are rotating elements, while in a case of a brake, one is a rotating element and the other is a non-rotating element) arranged coaxially as a clutch brake of an automatic transmission.

In such a friction element, a plurality of friction plates are mounted on each of the two members slidably in an axial direction, and the friction plates of the two members are arranged alternately, for example. By pressing the friction plates of the two members to each other by a hydraulic piston, the two members are coupled through the friction plates.

### SUMMARY OF INVENTION

In the above-described friction element, a hydraulic pressure needs to be continuously supplied to the hydraulic piston by operating a hydraulic pump in order to maintain a engaged state, which causes a problem of deterioration of a fuel cost of a vehicle on which the automatic transmission is mounted.

Thus, there can be such a configuration in which, though a engaging pressure is supplied until the friction element is engaged, after the friction element is engaged, movement of the hydraulic piston is regulated by a lock mechanism so that the friction element can maintain the engaged state even if the supply of the engaging pressure is lowered. According to this configuration, a fuel cost of the vehicle can be improved for a portion in which the engaging pressure supplied to the hydraulic piston is lowered and a discharge pressure of the hydraulic pump can be lowered.

In such an automatic transmission, it can be configured such that when the friction element is to be released, a release pressure is supplied so that the lock mechanism is unlocked, and the hydraulic piston is moved to a predetermined position so as to release the friction element.

However, if the hydraulic piston is fixed such that the hydraulic piston is inclined and brought into contact with another member, whereby movement thereof is prevented, even if the release pressure is supplied, the hydraulic piston might not move to the predetermined position. In such a case, the friction element is not released, and there is a concern that the friction element performs torque transmission.

The present invention was made in order to solve such problems and has an object to solve fixation of the hydraulic piston and to reliably release the friction element even if the hydraulic piston is fixed when the friction element is released.

An automatic transmission according to an aspect of the present invention is an automatic transmission arranged in a power transmission path and having a friction element in which, when an ON pressure is supplied to a engaging-side oil chamber, the hydraulic piston is moved and engaged and a lock mechanism enters a lock state, when the lock mechanism enters the lock state, a engaged state is maintained even if a hydraulic pressure of the engaging-side oil chamber is lowered, and when an OFF pressure is supplied to a release-side oil chamber when the lock mechanism is in the lock state, the lock mechanism enters an unlock state, the hydraulic piston is moved and released, and a release state is maintained even if the hydraulic pressure of the release-side oil chamber is lowered, provided with a hydraulic control unit configured to be controllable the ON pressure and the OFF pressure, a mode selection unit configured to be selectable a mode for engaging the friction element or a mode for releasing the friction element as a mode of the automatic transmission, and a release-state detection unit configured to detect whether or not the friction element has been released when the mode for releasing the friction element is selected from the mode for engaging the friction element and the OFF pressure is supplied to the release-side oil chamber, wherein the hydraulic control unit is configured to supply the OFF pressure to the release-side oil chamber again if the friction element is not released even if the OFF pressure is supplied to the release-side oil chamber.

A control method of an automatic transmission according to another aspect of the present invention is a control method of an automatic transmission for controlling the automatic transmission arranged in a power transmission path and having a friction element in which, when an ON pressure is supplied to a engaging-side oil chamber, the hydraulic piston is moved and engaged and a lock mechanism enters a lock state, when the lock mechanism enters the lock state, a engaged state is maintained even if a hydraulic pressure of the engaging-side oil chamber is lowered, and when an OFF pressure is supplied to a release-side oil chamber when the lock mechanism is in the lock state, the lock mechanism enters an unlock state, the hydraulic piston is moved and released, and a release state is maintained even if the hydraulic pressure of the release-side oil chamber is lowered, in which whether a mode of the automatic transmission is a mode for engaging the friction element or a mode for releasing the friction element is detected, when the mode of the automatic transmission is changed from the mode for engaging the friction element to the mode for releasing the friction element and the OFF pressure is supplied to the release-side oil chamber, whether or not the friction element has been released is detected, and when the mode of the automatic transmission is changed from the mode for engaging the friction element to the mode for releasing the friction element and the friction element is not released even if the OFF pressure is supplied to the release-side oil chamber, the OFF pressure is supplied again to the release-side oil chamber.

According to these aspects, if the mode of the automatic transmission is changed from the mode for engaging the friction element to the mode for releasing the friction element and the friction element is not released even if the OFF pressure is supplied to the release-side oil chamber, the friction element can be reliably released by supplying the OFF pressure again.

### BRIEF DESCRIPTION OF DRAWINGS

[Fig. 1] Fig. 1 is a schematic configuration view of a vehicle of this embodiment.
[Fig. 2] Fig. 2 is a schematic configuration view of a forward clutch and a clutch operation pack of this embodiment.
[Fig. 3] Fig. 3 is a flowchart for explaining release control of this embodiment.
[Fig. 4] Fig. 4 is a flowchart for explaining engaging control of this embodiment.

### DESCRIPTION OF EMBODIMENTS

An embodiment of the present invention will be described below by referring to the attached drawings.

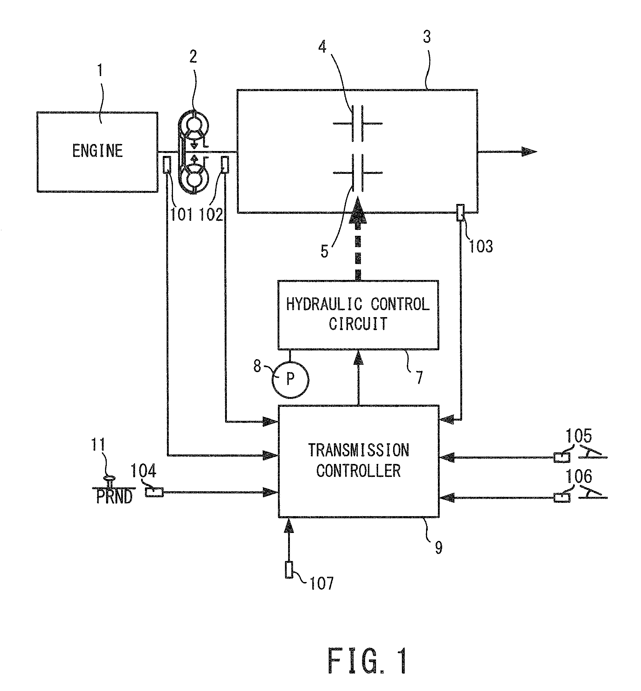

Fig. 1 illustrates a schematic configuration of a vehicle provided with an automatic transmission according to the embodiment of the present invention. The vehicle includes an engine 1, a torque converter 2, and a transmission 3, and output rotation of the engine 1 is transmitted to a driving wheel, not shown, through the torque converter 2, the transmission 3, and a differential gear unit, not shown.

The transmission 3 is a stepped or non-stage automatic transmission. The transmission 3 includes a reverse brake 4 and a forward clutch 5. The transmission 3 reverses rotation of the engine 1 and outputs it in a state in which the reverse brake 4 is engaged, while the rotation of the engine 1 is outputted while a rotation direction is maintained in a state in which the forward clutch 5 is engaged.

The reverse brake 4 is a prior-art friction element which is engaged by supplying an engaging pressure, and the engaging pressure needs to be continuously supplied in order to maintain the engaged state. It is only necessary to stop supply of the engaging pressure to release the reverse brake 4.

The forward clutch 5 is a friction element provided with a lock mechanism BL as will be described later. If an ON pressure is supplied to the forward clutch 5 and the lock mechanism BL enters a lock state, the forward clutch 5 can maintain the engaged state even if the supply of the ON pressure is stopped. In order to release the forward clutch 5, it is only necessary to supply an OFF pressure to the forward clutch 5 so as to bring the lock mechanism BL into a release state, and once the lock mechanism BL enters the release state, the forward clutch 5 can maintain the release state even if the supply of the OFF pressure is stopped. A configuration of the forward clutch 5 will be described later in detail.

If the reverse brake 4 and the forward clutch 5 are both engaged at the same time, an interlock state in which an input/output shaft of the transmission 3 cannot rotate is brought about and thus, engaging of them is performed selectively.

The hydraulic control circuit 7 includes a regulator valve for regulating a hydraulic pressure from a hydraulic pump 8 driven by the engine 1 to a line pressure, a solenoid valve for regulating a hydraulic pressure to be supplied to the friction element (if the transmission 3 is a continuously variable transmission, a constituent element of the continuously variable transmission mechanism in addition) including the forward clutch 5 with a line pressure as a source pressure, and an oil path connecting the hydraulic pump 8, each valve and each friction element.

Each valve of the hydraulic control circuit 7 is controlled on the basis of a control signal from a transmission controller 9. The transmission controller 9 is constituted by a CPU, a ROM, a RAM, an input/output interface and the like, determines a running state of the vehicle on the basis of various signals inputted from various sensors and an engine controller and outputs an instruction to the hydraulic control circuit 7 so that a gear position (a speed ratio if the transmission 3 is the continuously variable transmission) suitable for the running state is realized.

To the transmission controller 9, signals and the like from a rotation speed sensor 101 for detecting a rotation speed Ne of the engine 1, a rotation speed sensor 102 for detecting an input rotation speed of the transmission 3, a rotation speed sensor 103 for detecting an output rotation speed of the transmission 3, a mode detection switch 104 for detecting a mode of the transmission 3 selected by a select switch 11, an accelerator opening-degree sensor 105 for detecting an operation amount of an accelerator pedal (hereinafter referred to as an "accelerator opening-degree APO"), a brake switch 106 for detecting ON/OFF of the brake, a G sensor 107 for detecting acceleration/ deceleration of the vehicle and the like are inputted.

The select switch 11 is a lever type or a button type and is capable of selecting any one of modes, that is, a parking mode (hereinafter referred to as a "P mode"), a reverse mode (hereinafter referred to as an "R mode"), a neutral mode (hereinafter referred to as an "N mode"), and a drive mode (hereinafter referred to as a "D mode") as the mode of the transmission 3 by operating the lever or the button.

The transmission controller 9 engages or releases the reverse brake 4 and the forward clutch 5, respectively, in response to the mode selected by the select switch 11. Specifically, in the D mode, the reverse brake 4 is released, and the forward clutch 5 is engaged. In the R mode, the reverse brake 4 is engaged, and the forward clutch 5 is released. In the P mode and the N mode, the reverse brake 4 and the forward clutch 5 are released.

Subsequently, a detailed configuration of the forward clutch 5 will be described.

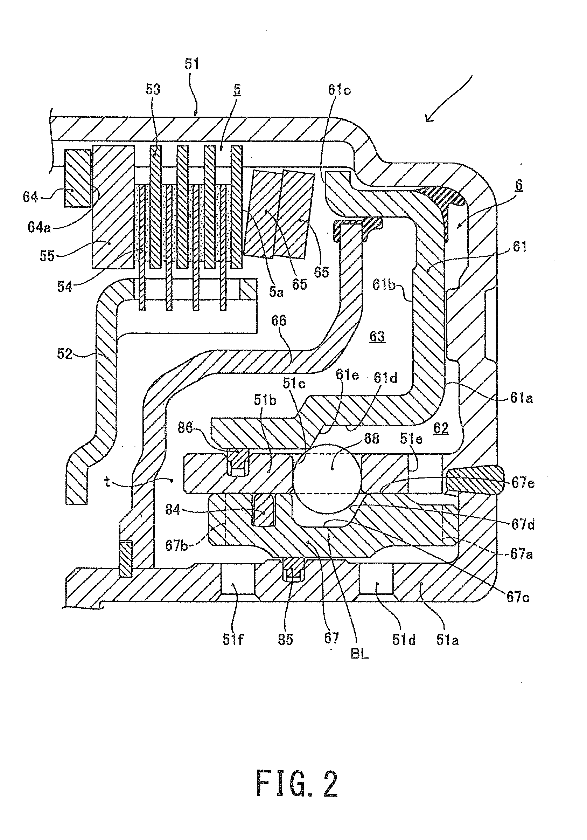

Fig. 2 illustrates sections of the forward clutch 5 and a clutch operation pack 6 for operating this. Each configuration will be described below.

The forward clutch 5 includes a clutch drum 51, a clutch hub 52, a driven plate 53, a drive plate 54, and a retainer plate 55.

The clutch drum 51 and the clutch hub 52 are arranged coaxially. To the clutch drum 51, a rotating element (shaft, gear and the like), not shown, is coupled. To the clutch hub 52, another rotating element (shaft, gear and the like), not shown, is coupled.

On the clutch drum 51, the driven plate 53 is mounted by spline coupling slidably in the axial direction. On the clutch hub 52, the drive plate 54 is mounted by spline coupling slidably in the axial direction. Four pieces of the driven plates 53 and four pieces of the drive plates 54 are arranged alternately, and clutch facing is bonded on friction surfaces on both sides of the drive plates 54.

The clutch drum 51 transmits rotation inputted from the rotating element coupled to the clutch drum 51 to the clutch hub 52 through the driven plate 53 and the drive plate 54.

The retainer plate 55 is interposed between the drive plate 54 arranged on an end portion on a side opposite to the hydraulic piston 61 and a snap ring 64 fixed to a groove in an inner periphery of the clutch drum 51. One of surfaces of the retainer plate 55 is the friction surface. The retainer plate 55 has a thickness in the axial direction larger than that of the driven plate 53 and prevents falling-down of the driven plate 53 and the drive plate 54.

The clutch operation pack 6 includes the hydraulic piston 61, an ON pressure piston chamber 62, an OFF pressure piston chamber 63, a snap ring 64, a diaphragm spring 65, a partition plate 66, and the lock mechanism BL.

The hydraulic piston 61 is arranged capable of displacement in the axial direction with respect to the forward clutch 5. One of the surfaces of the hydraulic piston 61 is an ON pressure receiving surface 61a, and the other surface is an OFF pressure receiving surface 61b.

The ON pressure piston chamber 62 is defined between the clutch drum 51 and the hydraulic piston 61 in order to have an ON pressure act on the ON pressure receiving surface 61a of the hydraulic piston 61.

The OFF pressure piston chamber 63 is defined between the partition plate 66 fixed to the clutch drum 51 and the hydraulic piston 61 in order to have an OFF pressure act on the OFF pressure receiving surface 61b of the hydraulic piston 61.

The snap ring 64 is arranged at a position on a side opposite to the hydraulic piston 61 sandwiching the forward clutch 5 between them and supports the forward clutch 5 in the axial direction.

The diaphragm spring 65 is interposed between a clutch-side end surface 61 c of the hydraulic piston 61 and a piston-side end surface 5a of the forward clutch 5. Two pieces of the diaphragm springs 65 are arranged by being stacked in the axial direction, and when the hydraulic piston 61 is moved in an engaging direction toward the snap ring 64, an engaging force is made to act on the forward clutch 5.

The lock mechanism BL is built in the clutch drum 51 and is constituted by the hydraulic piston 61, a ball holding piston 67, and a ball 68.

The hydraulic piston 61 is arranged capable of displacement in the axial direction with respect to the forward clutch 5. On the hydraulic piston 61, an accommodating portion 61 d and a taper surface 61 e are provided. The accommodating portion 61d accommodates the ball 68 when movement of the hydraulic piston 61 in a release direction is regulated. The taper surface 61e is formed continuously to the accommodating portion 61 d and it pushes the ball 68 into the inside when the hydraulic piston 61 makes a stroke in the release direction.

The ball holding piston 67 is arranged in a cylindrical space defined by an inner-peripheral cylindrical portion 51a of the clutch drum 51 covering the hydraulic piston 61 and a partition cylindrical wall portion 51 b protruding in the axial direction from the clutch drum 51. The ball holding piston 67 moves in the axial direction when the ON pressure or the OFF pressure acts. A space between an outer peripheral surface of the ball holding piston 67 and the partition cylindrical wall portion 51b is sealed by a seal ring 84, a space between an inner peripheral surface of the ball holding piston 67 and the inner-peripheral cylindrical portion 51a is sealed by a seal ring 85, and a space between an inner peripheral surface of the hydraulic piston 61 and the partition cylindrical wall portion 51b is sealed by a seal ring 86. As a result, the ON pressure piston chamber 62 and the OFF pressure piston chamber 63 are defined on both sides of the hydraulic piston 61.

An ON pressure port 51d opened in the clutch drum 51 and the ON pressure piston chamber 62 communicate with each other through an ON pressure communication groove 67a formed in the ball holding piston 67 and an ON pressure communication hole 51e opened in the partition cylindrical wall portion 51b. An OFF pressure port 51f opened in the clutch drum 51 and the OFF pressure piston chamber 63 communicate with each other through an OFF pressure communication groove 67b formed in the ball holding piston 67 and an OFF pressure communication gap ensured between an end portion of the partition cylindrical wall portion 51b and the partition plate 66.

On the ball holding piston 67, an accommodating portion 67c, a tapered surface 67d, and a lock surface 67e are provided. The accommodating portion 67c accommodates the ball 68 when movement of the hydraulic piston 61 in the release direction is allowed. The taper surface 67d and the lock surface 67e are formed continuously to the accommodating portion 67c, and when the ball holding piston 67 makes a stroke toward the forward clutch 5, the taper surface 67d pushes out the ball 68 to an outside, and the lock surface 67e locks the pushed-out ball 68 at that position.

The ball 68 is provided on a ball hole 51c opened in the partition cylindrical wall portion 51b. The ball 68 receives a force from the taper surfaces 61e and 67d of the pistons 61 and 67 with axial movement of the hydraulic piston 61 and the ball holding piston 67 by means of an action of the ON pressure or the OFF pressure and moves in a radial direction between a lock position and an unlock position.

According to the above-described configuration, by supplying the ON pressure to the ON pressure piston chamber 62, the hydraulic piston 61 moves to the engaging direction approaching the forward clutch 5, and the forward clutch 5 enters a engaged state by an urging force of the diaphragm spring 65 which is pushed/compressed. When the hydraulic piston 61 moves in the engaging direction, the ball 68 moves in an outer diameter direction by a centrifugal force by rotation and the hydraulic pressure, and the ball 68 is accommodated in the accommodating portion 61d. Then, with an ON pressure action onto the ball holding piston 67, the ball holding piston 67 moves in the axial direction (direction toward the forward clutch 5), and the ball 68 held by the accommodating portion 67c is held by the lock surface 67e.

As a result, the lock mechanism BL enters a lock state, and movement of the hydraulic piston 61 in the release direction is regulated, and even if the ON pressure is drained, the engaged state of the forward clutch 5 is maintained. The ON pressure to the ON pressure piston chamber 62 is supplied only during the engaging operation, and supply of the ON pressure in order to maintain the engaged state of the forward clutch 5 is not necessary.

A lower limit value of the ON pressure which can bring the lock mechanism BL into the lock state is called a lock pressure and is determined on the basis of a spring constant of the diaphragm spring 65, an area of the ON pressure receiving surface 61a of the hydraulic piston 61 and the like.

Moreover, the forward clutch 5 can also enter the engaged state without bringing the lock mechanism BL into the lock state by limiting a hydraulic pressure to be supplied to the hydraulic piston 61 to a hydraulic pressure lower than the ON pressure (hydraulic pressure lower than the lock pressure). In this case, since the movement of the hydraulic piston 61 in the release direction cannot be regulated by the lock mechanism BL, the limited hydraulic pressure needs to be continuously supplied to the hydraulic piston 61 in order to maintain the engaged state of the forward clutch 5.

Control of the transmission controller 9 by which the lock mechanism BL enters the lock state by supply/discharge of the ON pressure so as to maintain the engaged state of the forward clutch 5 is called normal engaging control. On the other hand, control of the transmission controller 9 by which a limited hydraulic pressure lower than the above-described ON pressure is continuously supplied, and the forward clutch 5 is maintained in the engaged state without bringing the lock mechanism BL into the lock state is called garage shift engaging control. When a D mode is selected by the select switch 11, the transmission controller 9 selects the normal engaging control or the garage shift engaging control on the basis of whether or not the operation of the select switch 11 is garage shift and executes the selected control.

Moreover, when the OFF pressure is supplied to the OFF pressure piston chamber 63, the ball holding piston 67 moves in the axial direction (direction away from the forward clutch 5) from a holding position of the ball 68 by the lock surface 67e to a holding release position. A force combining a force by the OFF pressure and a reaction force of the engaging force by the diaphragm spring 65 acts on the hydraulic piston 61, and the hydraulic piston 61 makes a stroke in a return direction and pushes back the ball 68 in an unlock direction. When the ball 68 moves to the unlock position, the lock mechanism BL enters an unlock state.

When the forward clutch 5 is released, the ON pressure is in a state of zero and thus, even if the OFF pressure is drained, the state in which the ball 68 is accommodated in the accommodating portion 67c of the ball holding piston 67 is maintained. The OFF pressure to the OFF pressure piston chamber 63 is supplied only during a release operation, and supply of the OFF pressure in order to maintain the unlock state of the forward clutch 5 is not necessary.

Control of the transmission controller 9 for realizing supply/discharge of the OFF pressure is called release control, and the transmission controller 9 executes the release control when a mode other than the D mode is selected by the select switch 11.

The ON pressure to the forward clutch 5 is not supplied when a non-running mode such as the N mode, the P mode or the like is selected due to the configuration of the hydraulic circuit and is supplied only when the D-mode running mode is selected.

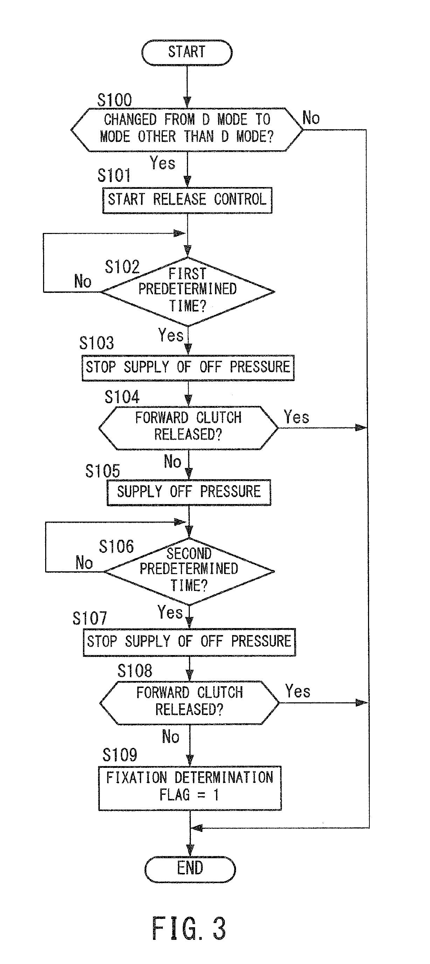

Subsequently, the release control of this embodiment will be described by using a flowchart in Fig. 3.

At Step S100, the transmission controller 9 determines whether or not the select switch 11 has been changed from the D mode to a mode other than the D mode on the basis of a signal of the mode detection switch 104. When the D mode has been changed to a mode other than the D mode, processing proceeds to Step S101, while the mode has not been changed from the D mode to a mode other than D mode, the processing is finished.

At Step S101, the transmission controller 9 supplies the OFF pressure to the OFF pressure piston chamber 63 and starts the release control.

At Step S102, the transmission controller 9 measures time since the OFF pressure was supplied to the OFF pressure piston chamber 63, compares the measured time with a first predetermined time and determines whether or not the measured time has reached the first predetermined time. If the measured time has reached the first predetermined time, the processing proceeds to Step S103. The first predetermined time is time set in advance and time required for the lock mechanism BL to be changed from the lock state to the unlock state so as to release the forward clutch 5.

At Step S103, the transmission controller 9 stops supply of the OFF pressure to the OFF pressure piston chamber 63 and drains the OFF pressure.

At Step S104, the transmission controller 9 determines whether or not the forward clutch 5 has been released. Specifically, the transmission controller 9 determines whether or not the forward clutch 5 has been released on the basis of the signals from the rotation speed sensor 101 for detecting a rotation speed Ne of the engine 1 and the rotation speed sensor 102 for detecting an input rotation speed of the transmission 3. If the OFF pressure is supplied to the OFF pressure piston chamber 63 and the lock mechanism BL is released, a differential rotation generated in the respective rotation speeds becomes small. That is because, even if the select switch 11 is changed from the D mode to the mode other than the D mode and the forward clutch 5 is released, the rotation speed of the engine 1 scarcely changes, but regarding the input rotation speed of the transmission 3, release of the forward clutch 5 reduces a rotation speed lowering amount for inertia of the transmission 3. The transmission controller 9 determines that the forward clutch 5 has been released when the respective rotation speeds have fallen to the predetermined differential rotation or less since the OFF pressure was supplied to the OFF pressure piston chamber 63. If the forward clutch 5 is released, the transmission controller 9 finishes the release control, and the processing is finished. If the forward clutch 5 has not been released, there is a concern that the hydraulic piston 61 is fixed, and thus, the processing proceeds to Step S105. The fixation of the hydraulic piston 61 occurs when the lock mechanism BL cannot be released such that a part of the ball 68 is broken and a part of the broken portion is caught between the hydraulic piston 61 and the partition cylindrical wall portion 51b or that the hydraulic piston 61 is inclined and brought into contact with the clutch drum 51 and prevents movement of the hydraulic piston 61 and the like, for example.

At Step S105, the transmission controller 9 supplies the OFF pressure to the OFF pressure piston chamber 63 in order to solve the fixation of the hydraulic piston 61. Here, the OFF pressure supplied at Step S101 or the OFF pressure higher than the OFF pressure supplied at Step S101 is supplied as the OFF pressure. By supplying the OFF pressure to the OFF pressure piston chamber 63 again, fixation of the hydraulic piston 61 can be solved by an impact and pressing in the supply of the OFF pressure.

At Step S106, the transmission controller 9 measures the time since the OFF pressure was supplied to the OFF pressure piston chamber 63 again and compares the measured time with a second predetermined time. If the measured time has reached the second predetermined time, the processing proceeds to Step S107. The second predetermined time is time set in advance and time required for solving the fixation of the hydraulic piston 61 and for releasing the forward clutch 5.

At Step S107, the transmission controller 9 stops the supply of the OFF pressure to the OFF pressure piston chamber 63 and drains the OFF pressure.

At Step S108, the transmission controller 9 determines again whether or not the forward clutch 5 has been released. Specifically, the transmission controller 9 determines whether or not the fixation of the hydraulic piston 61 has been solved and the forward clutch 5 has been released on the basis of the signals from the rotation speed sensor 101 and the rotation speed sensor 102. The specific determining method is the same as Step S104. If the forward clutch 5 has been released, the transmission controller 9 finishes the release control, and the processing is finished. If the forward clutch 5 has not been released, the processing proceeds to Step S109.

At Step S109, the transmission controller 9 determines that the hydraulic piston 61 is fixed, sets a fixation determination flag to "1" and finishes the release control, and the processing is finished. The fixation determination flag is "0" in an initial state.

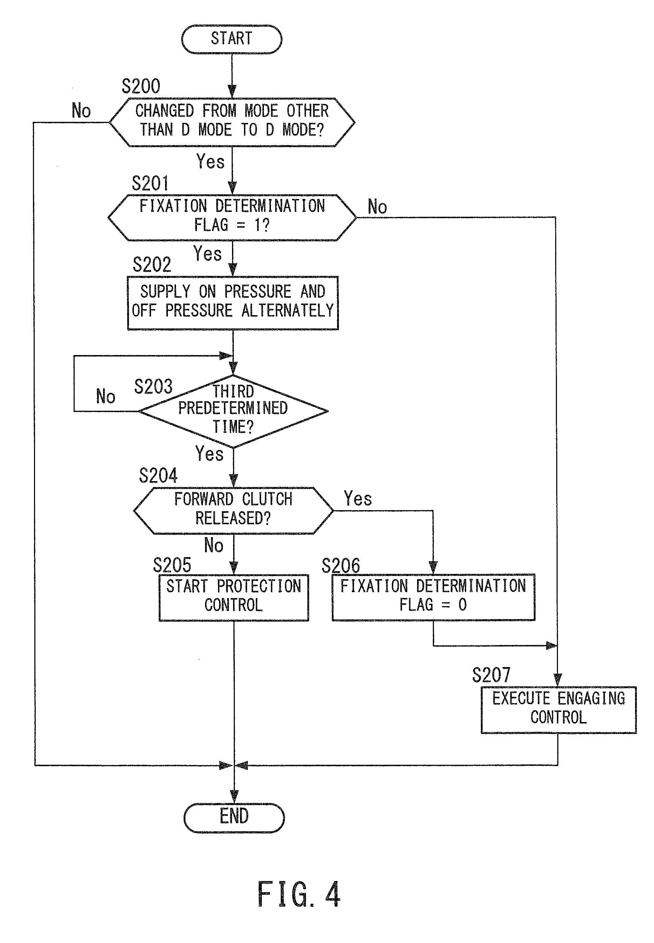

Subsequently, engaging control of this embodiment will be described by using a flowchart in Fig. 4. The normal engaging control will be described here, but it may be the garage shift engaging control.

At Step S200, the transmission controller 9 determines whether or not the select switch 11 has been changed from the mode other than the D mode to the D mode on the basis of the signal of the mode detection switch 104. If the mode other than the D mode has been changed to the D mode, the processing proceeds to Step S201, while in the other cases, the processing is finished.

At Step S201, the transmission controller 9 determines whether or not the fixation determination flag is "1" or not. If the fixation determination flag is "1", the processing proceeds to Step S202, while if the fixation determination flag is "0", the processing proceeds to Step S207.

At Step S202, the transmission controller 9 alternately repeats the supply of the ON pressure which can be supplied when the D mode is selected to the ON pressure piston chamber 62 and the supply of the OFF pressure to the OFF pressure piston chamber 63 in order to solve the fixation of the hydraulic piston 61. By performing supply of the ON pressure and the OFF pressure alternately, the fixation of the hydraulic piston 61 can be solved by the impact and pressing in supply/discharge of the hydraulic pressure. The ON pressure and the OFF pressure supplied here are the hydraulic pressures set in advance. Such supply of the hydraulic pressure is continued until a third predetermined time which will be described at Step S203 has elapsed.

At Step S203, the transmission controller 9 measures time since the supply of the ON pressure and the OFF pressure was started alternately and compares the measured time with the third predetermined time. When the measured time has reached the third predetermined time, the transmission controller 9 finishes alternate supply of the ON pressure and the OFF pressure. After that, the processing proceeds to Step S204. The third predetermined time is short time set in advance and time not affecting starting performance of the vehicle.

At Step S204, the transmission controller 9 determines again whether or not the forward clutch 5 has been released. Specifically, the transmission controller 9 determines whether or not the forward clutch 5 has been released on the basis of the signals from the rotation sensor 101 for detecting the rotation speed Ne of the engine 1 and the rotation speed sensor 102 for detecting the input rotation speed of the transmission 3. If a situation in which the respective rotation speeds fall to a predetermined differential rotation or less has occurred since the ON pressure and the OFF pressure were supplied alternately, the transmission controller 9 determines that the forward clutch 5 has been released. If the forward clutch 5 has been released, the processing proceeds to Step S206, while if the forward clutch 5 has not been released, the processing proceeds to Step S205.

At Step S205, the transmission controller 9 starts protection control. In the protection control, an alarm lamp is lighted, and a torque of the engine 1 is lowered, for example.

At Step S206, the transmission controller 9 changes the fixation determination flag to "0". The fixation determination flag is "0" unless it is changed to "1" at Step S109.

At Step S207, the transmission controller 9 executes the engaging control by supplying the ON pressure to the ON pressure piston chamber 62 and engages the forward clutch 5.

An effect of this embodiment will be described.

Even if the select switch 11 is changed from the D mode to the mode other than the D mode and the OFF pressure is supplied to the OFF pressure piston chamber 63, when the forward clutch 5 is not released, by supplying the OFF pressure to the OFF pressure piston chamber 63 again, the fixation of the hydraulic piston 61 can be solved, and the forward clutch 5 can be released.

Even if the select switch 11 is changed from the D mode to the mode other than the D mode and the OFF pressure is supplied again to the OFF pressure piston chamber 63 but still the fixation of the hydraulic piston 61 is not solved, when the select switch 11 is changed from the mode other than the D mode to the D mode, the ON pressure supply capable of supply to the ON pressure piston chamber 62 when the D mode is selected and the OFF pressure supply to the OFF pressure piston chamber 63 is performed alternately. As a result, the fixation of the hydraulic piston 61 can be solved.

The embodiment of the present invention has been described above, but the above-described embodiment illustrates only a part of the application example of the present invention and is not intended to limit the technical range of the present invention to the specific configuration of the above-described embodiment.

In the above-described embodiment, the signals from the rotation speed sensors 101 and 102 are used as a method for determining whether or not the forward clutch 5 has been released, but this is not limiting, and if a torque sensor is provided, for example, whether or not the forward clutch 5 has been released may be determined on the basis of a signal from the torque sensor.

In the above-described embodiment, in the case of the mode other than the D mode, that is, the N mode and the P mode, for example, the supply of the ON pressure to the forward clutch 5 is prohibited, while in the case of the D mode, the ON pressure and the OFF pressure are made capable of being supplied, but the ON pressure may be also made capable of being supplied in the mode other than the D mode. In this case, the ON pressure and the OFF pressure may be supplied alternately at Step S105, or the ON pressure and the OFF pressure may be supplied alternately before Step S109. The fixation of the hydraulic piston 61 may be solved in this way.

The present application claims for priority based on Japanese Patent Application No. 2012-212561 filed with Japan Patent Office on September 26, 2012, and the entire contents of this application are incorporated in this Description by reference.

## Claims

1. An automatic transmission arranged in a power transmission path and having a friction element in which, when an ON pressure is supplied to a engaging-side oil chamber, a hydraulic piston is moved and engaged and a lock mechanism enters a lock state, when the lock mechanism enters the lock state, a engaged state is maintained even if a hydraulic pressure of the engaging-side oil chamber is lowered, and when an OFF pressure is supplied to a release-side oil chamber when the lock mechanism is in the lock state, the lock mechanism enters an unlock state, the hydraulic piston is moved and released, and a release state is maintained even if the hydraulic pressure of the release-side oil chamber is lowered, comprising:
a hydraulic control unit configured to be controllable the ON pressure and the OFF pressure;
a mode selection unit configured to be selectable a mode for engaging the friction element or a mode for releasing the friction element as a mode of the automatic transmission; and
a release-state detection unit configured to detect whether or not the friction element has been released when the mode for releasing the friction element is selected from the mode for engaging the friction element and the OFF pressure is supplied to the release-side oil chamber, wherein
the hydraulic control unit is configured to supply the OFF pressure to the release-side oil chamber again if the friction element is not released even if the OFF pressure is supplied to the release-side oil chamber.

2. The automatic transmission according to claim 1, wherein
when the friction element is not released even if the OFF pressure is supplied again to the release-side oil chamber, the hydraulic control unit supplies the ON pressure and the OFF pressure alternately when the mode of the automatic transmission is changed from the mode for releasing the friction element to the mode for engaging the friction element.

3. A control method of an automatic transmission for controlling the automatic transmission arranged in a power transmission path and having a friction element in which, when an ON pressure is supplied to a engaging-side oil chamber, the hydraulic piston is moved and engaged and a lock mechanism enters a lock state, when the lock mechanism enters the lock state, a engaged state is maintained even if a hydraulic pressure of the engaging-side oil chamber is lowered, and when an OFF pressure is supplied to a release-side oil chamber when the lock mechanism is in the lock state, the lock mechanism enters an unlock state, the hydraulic piston is moved and released, and a release state is maintained even if the hydraulic pressure of the release-side oil chamber is lowered, comprising:
detecting whether a mode of the automatic transmission is a mode for engaging the friction element or a mode for releasing the friction element;
detecting whether or not the friction element has been released when the mode of the automatic transmission is changed from the mode for engaging the friction element to the mode for releasing the friction element and the OFF pressure is supplied to the release-side oil chamber; and
supplying the OFF pressure again to the release-side oil chamber when the mode of the automatic transmission is changed from the mode for engaging the friction element to the mode for releasing the friction element and the friction element is not released even if the OFF pressure is supplied to the release-side oil chamber.
